# EUROPEAN PATENT APPLICATION

(11) **EP 4 140 946 A1**
(43) Date of publication of application: **01.03.2023**
(21) Application number: 21193029.2
(22) Date of filing: 25.08.2021
(51) Int. Cl.: C01B 21/26, B01D 53/56, C01B 21/28, C01B 21/38, F01K 23/06

(54) **DUAL PRESSURE SYSTEM FOR PRODUCING NITRIC ACID AND METHOD OF OPERATING THEREOF**

(71) Applicant: Yara International ASA, 0277 Oslo (NO)
(72) Inventor: Vigeland, Bent, Skien (NO); Øien, Halvor, Porsgrunn (NO); Banasiak, Krzysztof, Trondheim (NO); de Smet, Andre, Terneuzen (NL); Fauconnier, Peter, Grimbergen (BE)
(74) Representative: De Clercq & Partners

(57) **Abstract**

The present disclosure discloses a system (**1**) for producing nitric acid at reduced power consumption. The system comprises an air compressor (**36**) for compressing air, comprising an inlet (**48**) and an outlet (**49**), to provide in a compressed air stream (**34**); a source of pressurised oxygen-rich gas (**50**) having a pressure higher than the pressure of the compressed air stream (**34**), in fluid communication with the compressed air stream (**34**), to provide ing an oxygen-rich gas/compressed air stream mixture (**53**); a mixing apparatus (**35**) for mixing the the oxygen-rich gas/compressed air stream mixture (**53**) with an ammonia gas stream (**32**), to provide in an ammonia/oxygen-enriched air mixture (**14**); an ammonia converter (**37**) for oxidising ammonia in the ammonia/oxygen-enriched air mixture (**14**), to provide in a NOₓ gas/steam mixture (**15**), comprising water and nitric oxide; means for measuring the temperature in the ammonia converter (**37**); means for regulating the concentration of ammonia and of oxygen in the ammonia converter (**37**); a steam turbine (**51**) or an electric motor and means for converting steam into electricity, for converting steam into power, in fluid communication with the ammonia converter (**37**) or the NOₓ/gas steam mixture (**15**); a water cooler/condenser (**38**) for separating and condensing steam from NOₓ gas in the gaseous NOₓ gas/steam mixture (**15**), thereby generating an aqueous diluted nitric acid mixture (**17**) and a gaseous NOₓ stream (**22**); a NOₓ gas compressor (**40**), for compressing the gaseous NOₓ stream (**22**), to provide in a compressed NOₓ gas (**24**); an absorption tower (**41**) downstream the water cooler/condenser (**38**) and, optionally, the cooler/separator (**39**) for absorbing NOₓ gases in water, to provide in a stream of raw nitric acid-containing residual NOₓ gas (**27**) and a tail gas (**5**) comprising NOₓ gases, comprising an absorption tower tail gas outlet (**6**) for evacuating the tail gas (**5**); and a tail gas expander (**7**) for expanding the tail gas, thereby generating an expanded tail gas (**64**), downstream of the absorption tower comprising a tail gas expander inlet (**8**) in fluid communication with the absorption tower tail gas outlet (**6**), and a tail gas expander outlet (**9**). The system is further characterised in that it further comprises means for splitting (**55**) the tail gas (**5**) into a tail gas stream (**5**) in fluid communication with the tail gas expander inlet (**8**) and a tail gas stream (**10**) having a pressure P1 in fluid communication with the compressed air stream (**34**); and means for adjusting the amount of tail gas (**5**) being splitted into the tail gas stream (**5**) in fluid communication with the tail gas expander inlet (**8**) and the tail gas stream (**10**) in fluid communication with the compressed air stream (**34**).

## Description

### Field

The present disclosure relates to the field of nitric acid production in a dual pressure plant.

### Introduction

Pure nitric acid is a clear, colorless liquid with a strong odor. Nitric acid is produced in large quantities principally by catalytic oxidation of ammonia (Ostwald process). Ammonia is converted to nitric acid in two stages. The ammonia is first oxidized in an ammonia burner on platinum gauzes (commonly called ammonia converter), producing nitric oxide (in this disclosure also called nitrogen monoxide (NO)) and water:
4 NH₃ (g) + 5 O₂ (g) → 4 NO (g) + 6 H₂O (g) (1)

The reaction product from (1), nitric oxide, following cooling, is then oxidized to nitrogen dioxide (NO₂) and further to dinitrogen tetroxide N₂O₄ (g) in an oxidation section:
2 NO (g) + O₂ (g) → 2 NO₂ (g) (2)
2 NO₂ (g) → N₂O₄ (g) (3)

Cooling of nitrogen oxide gases is accomplished first through the use of a waste heat recovery system recovering the heat from the conversion of ammonia into nitric oxide, then through the use of a cooler condenser in which condensed nitric acid is separated from nitric oxide, nitrogen dioxide and dinitrogen tetroxide and nitric acid gases, collectively called NOₓ gases, and finally by heating the tail gas released at the outlet of the absorption tower in which the NOₓ gases are absorbed.

By absorption in water, following compression through a NOₓ gas compressor, nitrogen dioxide and dinitrogen tetroxide are converted to nitric acid and nitric oxide:
3 NO₂ (g) + H₂O (I) → 2 HNO₃(aq) + NO(g) (4)
3 N₂O₄ (g) + 2 H₂O (I) → 4 HNO₃ (aq) + 2 NO (g) (5)

Weak nitric acid which is up to 68 % (azeotrope) is obtained. Through a rectification process the concentration of nitric acid can be increased up to 99 % concentrated nitric acid. The total reaction is given by the following formula:
NH₃ + 2 O₂ → HNO₃ + H₂O (6)

The main process units in a nitric acid production plant, include an ammonia converter (conversion of ammonia into nitric oxides using oxygen over a suitable catalyst), an oxidation section (conversion of nitric oxide into nitrogen dioxide and nitrogen tetroxide), an absorber unit (for the absorption of NOₓ gases into water) and a bleacher unit (removal of unreacted dissolved gases, containing in particular NOₓ and gases, from the aqueous nitric acid solution, which give it its typical brownish color).

The process for the production of nitric acid can be differentiated into a mono pressure (single-pressure) and dual pressure (split-pressure) process.

In a mono pressure process, the converter and the absorber unit operate at roughly the same working pressure. Such dual pressure process generally includes low-pressure (2 to 6 bar) and high pressure (6 to 16 bar, in particular 9 to 16 bar) processes.

In a dual pressure process, the absorber unit operates at a higher working pressure than the ammonia converter. Modern dual pressure processes feature a low-pressure (LP) ammonia converter operating typically at 2 to 6 bar, and a high pressure (HP) absorber unit operating at 9 to 16 bar.

A dual pressure process requires an air compressor to feed low-pressure air (which comprises about 21 vol% of oxygen) to the converter, and a NOₓ gas compressor to feed high pressured NOₓ gases to the absorber unit. The working pressure of an air compressor is from 2 to 6 bar, inclusive, and the working pressure of a NOₓ gas compressor is from 9 to 16 bar, inclusive.

The drive power for the air compressor typically originates from a tail gas turbine and a steam turbine or electric motor. Accordingly, the compressor train of a dual pressure nitric acid production plant typically comprises an air compressor, a NOₓ gas compressor, a tail gas turbine, and a steam turbine or electric motor.

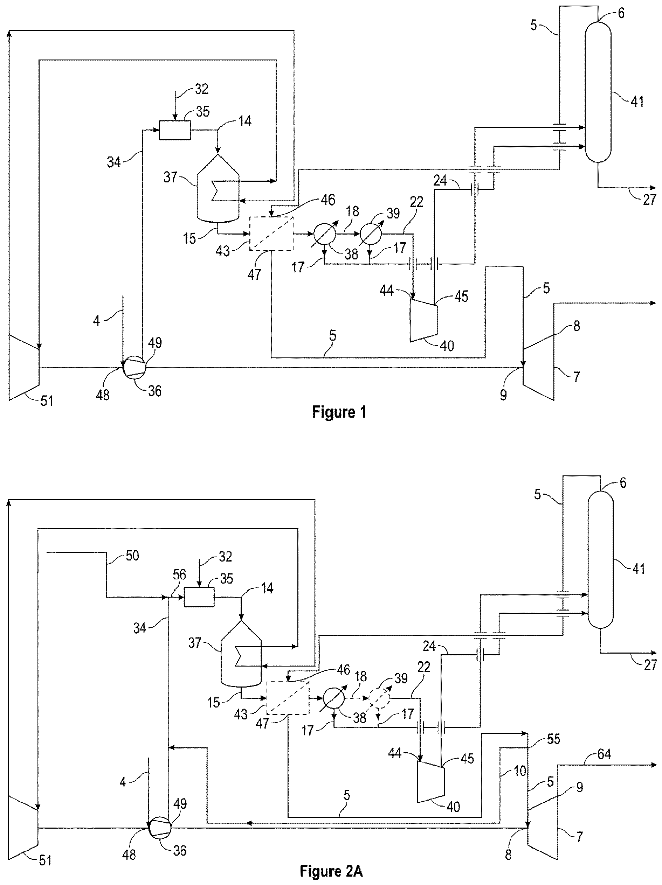

More in detail, referring to Figure 1, a dual pressure plant and process according to the prior art works as follows. Gaseous ammonia 32, optionally pre-heated in a pre-heater unit (not shown) is mixed with compressed air **34** pressurised to a low pressure using an air compressor 36 operable at a low gas pressure, in a mixing apparatus 35, and the resulting ammonia/oxygen-enriched air mixture **14** is fed to an ammonia converter 37, operating at a low pressure, where ammonia is oxidized over a suitable catalyst, thus obtaining a LP NOₓ gas/steam mixture 15, comprising water and nitric oxide (NO). The heat of the mixture coming out of the ammonia converter is recovered, after which the NOₓ gas/stream mixture is subsequently cooled down in a water cooler/condenser 38 to temperature where the water condenses, and an aqueous diluted nitric acid mixture 17 is separated from a gaseous NOₓ stream **18**. The LP gaseous NOₓ stream is further oxidized to further convert the NO to NO₂ and N₂O₄, and optionally cooled down again in a cooler/separator **39** to separate out another aqueous diluted nitric acid mixture 17 which is directed to an absorption tower 41, commonly called absorption tower. On the other end, the gaseous NOₓ stream 22 is sent to a NOₓ gas compressor **40** wherein its pressure is elevated from a low pressure to a high pressure, being about equal to the absorber unit operating pressure, and the pressurized gaseous NOₓ stream **24** is sent to the absorber unit **41** too. Inside the absorber unit **41**, the HP NOₓ gas reacts with water to produce the tail gas **5** and a stream of raw nitric acid **27** also containing residual NOₓ gas, which is fed to a bleacher (not shown). The residual NOₓ gas in the raw nitric acid stream 27 is then stripped out with a gaseous medium (not shown) such as an oxygen-containing gas or air, inside the bleacher unit (not shown) operating at low pressure; the bleacher unit is generally operated at about the same pressure as the ammonia converter. The drive power for both air compressor **36** and NOₓ gas compressor **40** originates from a tail gas expander **7** and a steam turbine **51** or electric motor (not shown). The heat generated in the ammonia converter 37 or from the gaseous NOₓ stream 15 is optionally used for heating the tail gas 5 in the tail gas heater 43, the tail gas heater being therefore optionally present. The steam from the gaseous NOx stream 24 may also be used for producing power from a steam turbine 51. The optionally heated tail gas 5 is expanded in the tail gas expander 7.

The air used for the oxidation of ammonia is commonly denoted as primary air; the air used as stripping medium in the bleacher unit is commonly denoted as secondary air.

According to the prior art, the revamping of the nitric acid production plants to increase its capacity is commonly based on increasing the amount of primary air to the reactor, which leads to a proportional increase of the amount of nitric acid produced.

The increase of the amount of primary air in the reactor entails the installation of a new air compressor or the revamping of the existing one. The increase of the primary air also causes a higher amount of gas to be processed subsequently into the NOₓ gas compressor. This entails the further revamping of the NOₓ gas compressor or the installation of a new one, and the modification or replacement of the tail gas and/or the steam-turbines and/or the electrical motor. Otherwise, the NOₓ gas compressor would easily achieve its process limit, thus becoming the bottleneck of the plant.

However, the revamping has significant drawbacks. First of all, it entails elevated costs for the modification or replacement of the existing equipment, i.e. the air compressor, the NOₓ gas compressor and the corresponding turbines and electrical motor. In addition, the revamping of the equipment is also technically demanding leading to long plant downtime.

Another problem related to nitric acid production plants is the high amount of energy required in order to operate the air compressor. Consequently, a high amount of energy is required to achieve the targeted nitric acid production throughput.

A goal of the present invention, therefore, is to provide a system and a method for operating the system which allows for the reduction of power required to operate the air compressor in a dual nitric acid plant.

### Background Prior Art

In CN110540178A (China Chengda Engineering Co Ltd, 2019), process for producing nitric acid is disclosed. Nitric acid is produced by a medium pressure method, which is characterized in that it comprises the following steps: the ammonia oxidation and absorption pressure is 0.5-0.6 MPa; enabling the tail gas leaving the absorption tower to pass through a carbon molecular sieve Temperature Swing Adsorption (TSA) treatment device to reduce the content of nitrogen oxides in the tail gas to be less than 100mg/Nm³; the process air of the air compressor is used as the regeneration desorption gas of the carbon molecular sieve temperature swing adsorption treatment device, and the regeneration desorption gas containing the nitrogen oxide can be returned to the ammonia oxidation reactor for reuse; adding a layer of N₂O decomposition catalyst in the oxidation reactor to reduce the content of N₂O to 50-100 PPM through reaction; the nitric acid bleaching tower is arranged at the bottom of the absorption tower, and the two towers are integrated, so that the process flow is shortened, and the equipment investment is reduced. With regard to the amount of air being compressed by the air compressor, however, the same amount of air is to be compressed as would be in the absence of the TSA unit: in the presence of the TSA unit, the amount of air being compressed is initially split between the TSA unit and the ammonia oxidation reactor directly and, in the end, with the amount of compressed air leaving the TSA unit being directed also to the ammonia oxidation reactor, the total amount of air compressed by the air compressor ends up in the ammonia oxidation reactor.

In WO2018/162150A1 (Casale SA, 13 September 2018) a solution is proposed to overcome the revamping drawbacks. WO2018162150A1 discloses a dual pressure plant for the production of nitric acid comprising a reactor providing a gaseous effluent containing nitrogen oxides, an absorber unit in which nitrogen oxides react with water providing raw nitric acid and, the absorber unit operating at a pressure greater than the pressure of the reactor, a compressor elevating the pressure of the reactor effluent to the absorber unit pressure, the plant also comprising a first HP bleacher unit and a second LP bleacher unit, the first HP bleacher unit stripping with air the NOₓ gas from the output stream of the absorber unit, thus providing a partially stripped nitric acid stream and a nitrogen oxides-loaded air stream, the former being fed to the second LP-bleacher unit and the latter being recycled to the oxidation section, upstream of the NOₓ gas compressor.

A further air compressor is also provided, which supplies the first HP bleacher unit with air. Hence, energy is required in order to operate a first HP bleacher unit at a high pressure and then recycle NOₓ gases to the delivery side of the NOₓ gas compressor.

Therefore, there remains a need for a process and a corresponding plant setup for minimizing the amount of energy required in order to operate the NOₓ gas compressor and, preferably, also the air compressor, in order to avoid bottlenecks in the nitric acid production throughput associated with those compressors.

### Summary

In one aspect of the disclosure, a system for producing nitric acid at reduced power consumption is disclosed. The system comprises:
- an air compressor for compressing air, comprising an inlet and an outlet, to provide in a compressed air stream;
- a source of pressurised oxygen-rich gas having a pressure higher than the pressure of the compressed air stream, in fluid communication with the compressed air stream, to provide in an oxygen-rich gas/compressed air stream mixture;
- a mixing apparatus for mixing the oxygen-rich gas/compressed air stream mixture with an ammonia gas stream, to provide in an ammonia/oxygen-enriched air mixture;
- an ammonia converter for oxidising ammonia in the ammonia/oxygen-enriched air mixture, to provide in a NOₓ gas/steam mixture, comprising water and nitric oxide;
- means for measuring the temperature in the ammonia converter;
- means for regulating the concentration of ammonia and of oxygen in the ammonia converter;
- a steam turbine or an electric motor and means for converting steam into electricity, for converting steam into power, in fluid communication with the ammonia converter or the NOₓ/gas steam mixture;
- a water cooler/condenser for separating and condensing steam from NOₓ gas in the gaseous NOₓ gas/steam mixture, thereby generating an aqueous diluted nitric acid mixture and a gaseous NOₓ stream;
- a NOₓ gas compressor for compressing the gaseous NOₓ stream, to provide in a compressed NOₓ gas stream;
- an absorption tower downstream the NOₓ gas compressor for absorbing the NOₓ gases from the compressed NOₓ gas stream in water, to provide in a stream of raw nitric acid-containing residual NOₓ gas and a tail gas comprising NOₓ gases, comprising an absorption tower tail gas outlet for evacuating the tail gas; and
- a tail gas expander for expanding the tail gas downstream of the absorption tower comprising a tail gas expander inlet in fluid communication with the absorption tower tail gas outlet, and a tail gas expander outlet, thereby generating an expanded tail gas.

The system is characterised in that it further comprises:
- means for splitting the tail gas into a tail gas stream in fluid communication with the tail gas expander inlet and a tail gas stream having a pressure P1 in fluid communication with the compressed air stream; and
- means for adjusting the amount of tail gas being splitted into the tail gas stream in fluid communication with the tail gas expander inlet and the tail gas stream in fluid communication with the compressed air stream.

The inventors have realised that upon recirculating part of the tail gas to the compressed air stream, downstream the air compressor and upstream the ammonia converter, while at the same time feeding pressurised oxygen to the compressed air stream, and maintaining the temperature in the ammonia converter in the range of 800 to 950 °C and the oxygen to ammonia molar ratio in the ammonia converter between 1.3 and 9, a net reduction of the power consumption by the compressor train is gained, considering all the reduced power production from the tail gas expander, the increased demand on the NOₓ compressor, and the reduction of the power required by the air compressor. Therefore, with the system of the disclosure, power reduction is achieved at the same time as the size of the air compressor and the size of the tail gas expander are reduced, resulting in the reduction of the area footprint of the plant and simplification of the system.

In one embodiment according to the system of the disclosure, the system further comprises a tail gas heater, having an inlet in fluid communication with the absorption tail gas outlet 6 and an outlet in fluid communication with the tail gas expander inlet, positioned upstream from the water cooler/condenser for heating the tail gas coming from the absorption tower to a temperature ranging between 200 to 650 °C with the heat from the NOₓ gas/steam mixture coming from the ammonia converter, and wherein means for splitting the tail gas is positioned upstream from the tail gas heater.

In one embodiment according to the system of the disclosure, the system further comprises a tail gas heater, having an inlet in fluid communication with the absorption tail gas outlet and an outlet in fluid communication with the tail gas expander inlet, positioned upstream from the water cooler/condenser for heating the tail gas coming from the absorption tower to a temperature ranging between 200 to 650 °C with the heat from the NOₓ gas/steam mixture coming from the ammonia converter, and wherein means for splitting the tail gas is positioned downstream from the tail gas heater.

In one embodiment according to the system of the disclosure, the source of pressurised oxygen-rich gas is supplied by a high pressure water electrolyser.

In one embodiment according to the system of the disclosure, the system further comprises a source of oxygen-rich gas having a pressure at least equal to atmospheric pressure, in fluid communication with the inlet of the air compressor.

In one embodiment according to the system of the disclosure, the system further comprises:
- an additional source of pressurised oxygen-rich gas in fluid communication with an area downstream the NOₓ gas compressor; or
- a gas ejector having a first inlet in fluid communication with the tail gas in fluid communication with the compressed air stream, a second inlet in fluid communication with a source of air or oxygen-rich gas at a pressure lower than P1, the expanded gas or the gaseous NOₓ stream, and an outlet in fluid communication with the compressed air stream; or
- an additional tail gas expander in fluid communication with the stream of tail gas in fluid communication with the compressed air stream.

In one embodiment according to the system of the disclosure, the system further comprises:
- a high pressure bleacher in fluid communication with the absorption tower for removing NOx gases from the stream of raw nitric acid-containing residual NOₓ gas; and
- a high pressure water electrolyser in fluid connection with the high pressure bleacher;
wherein the additional source of pressurised oxygen-rich-gas is the electrolyser and is in fluid communication with the high pressure bleacher and, in turn, with the absorption tower and an area downstream the NO_{X} gas compressor.

In one aspect of the disclosure, a method for producing nitric acid at reduced power consumption is disclosed. The method comprises the steps of:
a) compressing air in an air compressor, thereby producing a compressed air stream;
b) mixing pressurised oxygen-rich gas having a pressure higher than the pressure of the compressed air stream with the compressed air stream, thereby obtaining an oxygen-rich gas/compressed air stream mixture;
c) mixing the oxygen-rich gas/compressed air stream mixture with an ammonia gas stream in a mixing apparatus, thereby producing an ammonia/oxygen-enriched air mixture, such as to achieve an oxygen to ammonia molar ratio ranging from 1.3 to 9;
d) oxidising ammonia in the ammonia/oxygen-enriched air mixture in an ammonia converter at 800 to 950 °C, thereby producing a gaseous NOₓ gas/steam mixture, comprising water and nitric oxide;
e) converting the steam generated in the ammonia converter or from the gaseous NOₓ gas/steam mixture into power;
f) separating and condensing steam from NOₓ gas in the gaseous NOₓ gas/steam mixture, thereby generating an aqueous diluted nitric acid mixture and a gaseous NOₓ stream, in a water cooler/condenser;
g) compressing the gaseous NOₓ stream, thereby producing a compressed NOₓ gas stream, in a NOₓ gas compressor;
h) absorbing the gaseous NOₓ stream in an absorption tower, thereby producing a stream of raw nitric acid-containing residual NOₓ gas and a tail gas comprising NOₓ gases; and
i) expanding the tail gas in a tail gas expander, thereby generating an expanded tail gas.

The method is characterised in that it further comprises the steps of:
j) mixing part of the tail gas **5** obtained from step h) at a pressure P1 with the compressed air stream, thereby generating a fluid communication between a stream of tail gas (**10**) and the compressed air stream;
k) measuring the temperature in the ammonia converter; and
I) adjusting the amount of the total gas volume mixed in step j) if the temperature measured in step k) is outside the range of 800-950 °C, such that the temperature in the ammonia converter is maintained in the range of 800 and 950 °C.

In one embodiment according to the method of the disclosure, the method further comprises the step of:
m) heating the tail gas obtained in step h) to a temperature ranging from 200 to 650 °C in a tail gas heater positioned upstream from the water cooler/condenser with the heat from the NOₓ gas/steam mixture coming from the ammonia converter.

In one embodiment according to the method of the disclosure, in step j), the method further comprises the step of:
m) heating the tail gas obtained in step h) to a temperature ranging from 200 to 650 °C in a tail gas heater positioned upstream from the water cooler/condenser with the heat from the NOₓ gas/steam mixture coming from the ammonia converter, wherein, in step h), part of the tail gas obtained in step h) or in step m) is pressurised

In one embodiment according to the method of the disclosure, the method further comprises the step of:
n) operating a high pressure water electrolyser in order to produce the oxygen gas used in the mixing step j).

In one embodiment according to the method of the disclosure, the method further comprises the step of:
o) sending an oxygen-rich gas having a pressure at least equal to atmospheric pressure to the inlet of the air compressor.

In one embodiment according to the method of the disclosure, the method further comprises the steps of:
p) feeding an additional source of pressurised oxygen-rich gas downstream the NOₓ gas compressor; or
operating a gas ejector having a first inlet, a second inlet and an outlet, by flowing the stream of tail gas in fluid communication with the compressed air stream to the first inlet, flowing a source of air or oxygen-rich gas at a pressure lower than P1, the expanded tail gas or the gaseous NOₓ stream to the second inlet, and by ejecting the gas mixture at the outlet of the gas ejector to the compressed air stream; or
expanding the stream of tail gas in fluid communication with the compressed air stream in an additional tail gas expander.

In one embodiment according to the method of the disclosure, the method further comprises the steps of:
q) operating a high pressure bleacher in fluid communication with the absorption tower, thereby removing NOx gases from the stream of raw nitric acid-containing residual NOₓ gas;
r) operating a high pressure water electrolyser, thereby producing the source of pressurised oxygen-rich-gas; and
t) supplying the source of pressurised oxygen-rich-gas to the high pressure bleacher and, in turn, to the absorption tower and to an area downstream the NO_{X} gas compressor and upstream the absorption tower.

In one aspect of the disclosure, the use of the system of the disclosure for performing the method of the system is disclosed.

In one aspect of the disclosure, a method for revamping a system for producing nitric acid comprising:
- an air compressor for compressing air, comprising an inlet and an outlet, thereby producing a compressed air stream;
- a source of pressurised oxygen-rich gas having a pressure higher than the pressure of the compressed air stream, in fluid communication with the compressed air stream, to provide in an oxygen-rich gas/compressed air stream mixture;
- a mixing apparatus for mixing the oxygen-rich gas/compressed air stream mixture with an ammonia gas stream, to provide in an ammonia/oxygen-enriched air mixture;
- an ammonia converter for oxidising ammonia in the ammonia/oxygen-enriched air mixture, to provide in a NOₓ gas/steam mixture, comprising water and nitric oxide; means for measuring the temperature in the ammonia converter;
- means for regulating the concentration of ammonia and of oxygen in the ammonia converter;
- a steam turbine or an electric motor and means for converting steam into electricity, for converting steam into power, in fluid communication with the ammonia converter or the NOₓ/gas steam mixture;
- a water cooler/condenser and, optionally, a cooler/separator, wherein the water cooler/condenser is located upstream the cooler/separator, for separating and condensing steam from NOₓ gas in the gaseous NOₓ gas/steam mixture, thereby generating an aqueous diluted nitric acid mixture and a gaseous NOₓ stream;
- a NOₓ gas compressor, for compressing the gaseous NOₓ stream, to provide in a compressed NOₓ gas stream;
- an absorption tower downstream the NOₓ gas compressor for absorbing the NOₓ gases from the compressed NOₓ gas stream in water to provide in a stream of raw nitric acid-containing residual NOₓ gas and a tail gas comprising NOₓ gases, comprising an absorption tower tail gas outlet for evacuating the tail gas;
- a tail gas expander for expanding the tail gas, thereby generating an expanded tail gas, downstream of the absorption tower comprising a tail gas expander inlet in fluid communication with the absorption tower tail gas outlet, and a tail gas expander outlet; and
- optionally, a tail gas heater upstream the water cooler/condenser and, optionally, the cooler/separator, for heating the tail gas to a temperature ranging from 200 to 650 °C, and comprising a tail gas heater inlet and a tail gas heater outlet, wherein the tail gas heater inlet is in fluid communication with the absorption tail gas outlet, and wherein the tail gas heater is in fluid communication with the tail gas expander inlet;
into a system according to the system of the disclosure, is disclosed. The method comprises the steps of:
- introducing means for splitting the tail gas into a tail gas stream in fluid communication with the tail gas expander inlet and a tail gas stream in fluid communication with the compressed air stream; and
- introducing means for adjusting the amount of tail gas being splitted into the tail gas stream in fluid communication with the tail gas expander inlet and the tail gas stream in fluid communication with the compressed air stream.

### List of Figures

- **Figure 1:**: dual pressure nitric acid plant according to the prior art
- **Figure 2A:**: dual pressure nitric acid plant according to the invention
- **Figure 2B:**: mono pressure nitric acid plant according to the invention
- **Figure 3:**: embodiment of the dual pressure nitric acid plant according to the invention
- **Figure 4A:**: embodiment of the dual pressure nitric acid plant according to the invention
- **Figure 4B:**: embodiment of the dual pressure nitric acid plant according to the invention
- **Figure 4C:**: embodiment of the dual pressure nitric acid plant according to the invention

**List of numerals**

| | |
|---|---|
| **4** | air |
| **5** | tail gas in fluid communication with the tal gas expander inlet **8** |
| **6** | outlet of nitric acid absorption tower |
| **7** | tail gas expander |
| **8** | inlet of tail gas expander |
| **9** | outlet of tail gas expander |
| **10** | tail gas in fluid communication with compressed air stream **34** |
| **14** | ammonia/oxygen-enriched air mixture |
| **15** | Low-pressure NOₓ gas/steam mixture |
| **17** | aqueous diluted nitric acid mixture |
| **18** | gaseous NOₓ stream |
| **22** | gaseous NOₓ stream |
| **24** | compressed NOₓ gas stream |
| **27** | stream of raw nitric acid-containing residual NOₓ gas |
| **32** | ammonia |
| **34** | compressed air stream |
| **35** | mixing apparatus |
| **36** | air compressor |
| **37** | ammonia converter |
| **38** | water cooler/condenser |
| **39** | cooler/separator |
| **40** | NOₓ gas compressor |
| **41** | absorption tower |
| **43** | tail gas heater |
| **44** | NOₓ gas compressor inlet |
| **45** | NOₓ gas compressor outlet |
| **46** | tail gas heater inlet |
| **47** | tail gas heater outlet |
| **48** | air compressor inlet |
| **49** | air compressor outlet |
| **50** | pressurised oxygen-rich gas stream having a pressure higher than the compressed air |
| **51** | steam turbine |
| **52** | pressurised tail gas |
| **53** | an oxygen-rich gas/compressed air stream mixture |
| **54** | source of oxygen-rich gas having a pressure at least equal to atmospheric pressure |
| **55** | means for splitting the tail gas |
| **56** | gas ejector |
| **57** | first inlet of the gas ejector |
| **58** | second inlet of the gas ejector |
| **59** | outlet of the gas ejector |
| **60** | additional tail gas expander |
| **61** | pressurised oxygen-rich gas |
| **62** | high pressure bleacher |
| **63** | high pressure water electrolyser |
| **64** | expanded tail gas |

### Detailed description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawingt), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "in the ranges of" and "ranging from ... to ..." as used when referring to a range for a measurable value, such as a parameter, an amount, a time period, and the like, is intended to include the limits associated to the range that is disclosed.

As defined herein, a pressurised oxygen-rich gas is a gas having a pressure ranging from 9 to 30 bar, preferably 15 to 30 bar, and comprising more than 21 vol% of oxygen, more in particular more than 30 vol%, more than 40 vol%, more than 50 vol%, more than 60 vol%, more than 70 vol%, more than 80 vol%, more than 90 vol%, more than 95 vol%, and more than 99 vol%, more in particular 100 vol% of oxygen.

As defined herein, an oxygen-rich gas is a gas comprising more than 21 vol% of oxygen, more in particular more than 30 vol%, more than 40 vol%, more than 50 vol%, more than 60 vol%, more than 70 vol%, more than 80 vol%, more than 90 vol%, more than 95 vol%, and more than 99 vol%, more in particular 100vol% of oxygen.As defined herein, air is ambient air, having a pressure about the atmospheric pressure.

### System for producing nitric acid

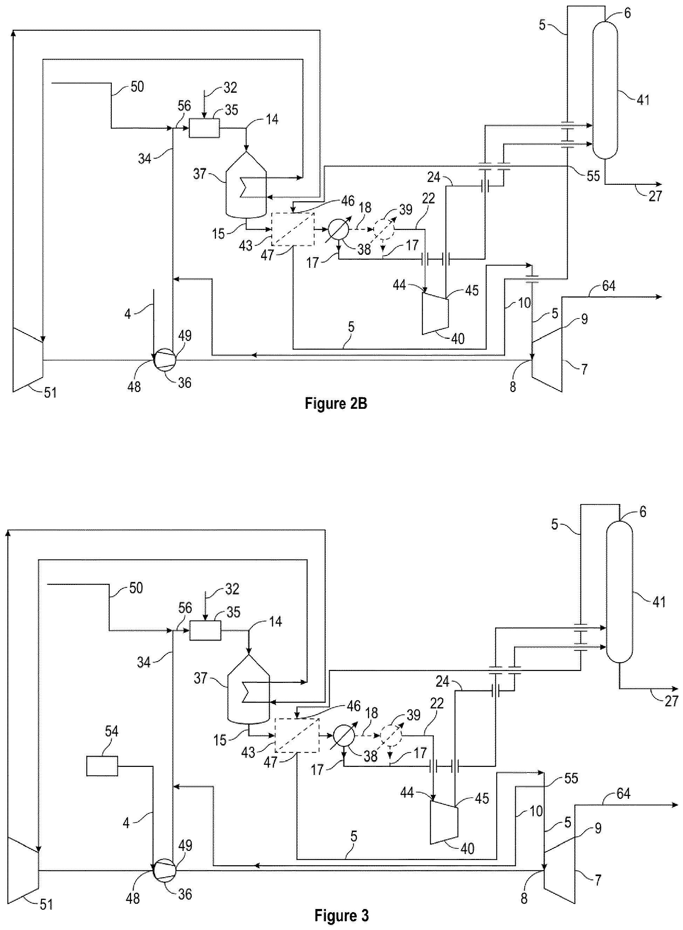

Reference is made to Figures 2A and 2B. In one aspect of the disclosure, a system for producing nitric acid at reduced power consumption is disclosed. The system comprises an air compressor 36 for compressing air, comprising an inlet **48** and an outlet 49, to provide in a compressed air stream 34; a source of pressurised oxygen-rich gas **50** having a pressure higher than the pressure of the compressed air stream 34, in fluid communication with the compressed air stream 34, to provide in an oxygen-rich gas/compressed air stream mixture 53; a mixing apparatus 35 for mixing the oxygen-rich gas/compressed air stream mixture 53 with an ammonia gas stream 32, to provide in an ammonia/oxygen-enriched air mixture 14; a source of pressurised oxygen-rich gas 50 having a pressure higher than the pressure of the compressed air stream 34, in fluid communication with the compressed air stream 34; an ammonia converter 37 for oxidising ammonia in the ammonia/oxygen-enriched air mixture **14**, to provide in a NOₓ gas/steam mixture **15**, comprising water and nitric oxide; means for measuring (not shown) the temperature in the ammonia converter **37**; means for regulating the concentration of ammonia and of oxygen in the ammonia converter 37; a steam turbine 51 or an electric motor and means for converting steam into electricity, for converting steam into power, in fluid communication with the ammonia converter 37 or the NOₓ/gas steam mixture 15; a water cooler/condenser 38 and, optionally, a cooler/separator 39, wherein the water cooler/condenser 38 is located upstream the cooler/separator 39, for separating and condensing steam from NOₓ gas in the gaseous NOₓ gas/steam mixture 15, thereby generating an aqueous diluted nitric acid mixture **17** and a gaseous NOₓ stream **22**; a NOₓ gas compressor **40** for compressing the gaseous NOₓ stream **22**, to provide in a compressed NOₓ gas stream **24**; an absorption tower **41** downstream the NOₓ gas compressor **40** for absorbing the NOₓ gases from the compressed NOₓ gas stream **24** in water, to provide in a stream of raw nitric acid-containing residual NOₓ gas **27** and a tail gas **5** comprising NOₓ gases, comprising an absorption tower tail gas outlet **6** for evacuating the tail gas **5**; a tail gas expander **7** for expanding the tail gas 5, thereby generating an expanded tail gas 64, downstream of the absorption tower comprising a tail gas expander inlet 8 in fluid communication with the absorption tower tail gas outlet 6, and a tail gas expander outlet 9; and optionally, a tail gas heater 43 upstream the water cooler/condenser 38 and, optionally, the cooler/separator 39, for heating the tail gas 5 to a temperature ranging from 200 to 650 °C, and comprising a tail gas heater inlet 46 and a tail gas heater outlet 47, wherein the tail gas heater inlet 46 is in fluid communication with the absorption tail gas outlet 6, and wherein the tail gas heater outlet 47 is in fluid communication with the tail gas expander inlet 8.

The system is characterised in that it further comprises means for splitting 55 the tail gas **5** into a tail gas stream **5** in fluid communication with the tail gas expander inlet **8** and a tail gas stream **10** having a pressure P1 in fluid communication with the compressed air stream **34**; and means for adjusting the amount of tail gas **5** being splitted into the tail gas stream **5** in fluid communication with the tail gas expander inlet 8 and the tail gas stream 10 in fluid communication with the compressed air stream 34.

As defined herein, means for adjusting the oxygen to ammonia molar ratio are any suitable means for assessing the amount of ammonia to be introduced in the system from a measure of the oxygen concentration, or the amount of oxygen to be introduced in the system from a value of the ammonia concentration, such that the oxygen to ammonia molar ratio will range from 1.3 to 9. The oxygen or ammonia concentration can be determined, for example, from a measurement in the gas phase using a process gas analyser. The oxygen or ammonia concentration can also be determined from computing using the concentration of the oxygen- or ammonia source being introduced in the system, the flow at which the source is introduced in the system, and the relative flow values at which the gases are mixed. Using the oxygen or ammonia concentration, the relevant flow of ammonia or oxygen respectively to be introduced in the system is, in turn, determined and is used in controlling the flow of ammonia or oxygen, from gaseous sources of ammonia or oxygen respectively at pre-determined concentrations. Controlling of the flow of gaseous ammonia or oxygen can, for example, be achieved through flow control valves. In particular, the means is an integrated process control system, in which the concentration of oxygen or ammonia respectively is measured, and the relevant flow of ammonia or oxygen respectively is thereby determined, thus controlling the flow of ammonia or oxygen, from gaseous sources of ammonia or oxygen respectively at pre-determined concentrations.

As defined herein, means for measuring the temperature are any means suitable for measuring and indicating the temperature in the ammonia oxidation burner. In particular, the means for measuring the temperature is a thermocouple or a thermometer suitable for measuring and indicating a temperature ranging as high as 1000 °C. More in particular, the means for measuring the temperature is an infrared thermometer for measuring and indicating a temperature as high as 1000 °C.

As defined herein, means for converting steam into power are any mean for achieving power from steam. In particular those means are a steam turbine connected to an electric generator.

As defined herein, means for splitting are any means suitable for splitting the tail gas 5 such as to generate, in addition to the tail gas or the heated tail gas 5, another gas stream 10 of tail gas in fluid communication with the compressed air stream 34. In particular, the means for splitting is a T-connection having one inlet and two outlets, such that a gas flowing through the inlet of the T-connection is splitted into two gas streams of identical chemical composition.

As defined herein, means for adjusting the amount of tail gas 5 being splitted into the stream of tail gas **10** in fluid communication with the compressed air stream **34** and the tail gas 5 in fluid communication with the tail gas expander inlet 8, are any means for controlling the splitting in the means for splitting 55. In particular, the means for splitting 55 is a T-connection as described above and the means for adjusting is an orifice or a guide vane or a flow control valve at one or both of the outlets of the T-connection. Even more in particular, the means is an integrated process control system, in which the temperature in the ammonia converter **37** is determined through the means for measuring the temperature. The temperature in the ammonia converter **37** is then used for controlling a flow control valve in the means for splitting 55, thereby controlling the splitting of the tail gas 5, in order for the measured temperature to be maintained in the range of 800-950 °C.

The inventors have realised that upon recirculating part of the tail gas 5 to the compressed air stream 34, downstream the air compressor 36 and upstream the ammonia converter 37, while at the same time feeding pressurised oxygen **50** to the compressed air stream **34**, and maintaining the temperature in the ammonia converter **37** in the range of 800 to 950 °C and the oxygen to ammonia molar ratio in the ammonia converter **37** between 1.3 and 9, net reduction of the power consumption by the air compressor is gained. Indeed the tail gas 5 leaving the absorption tower **41** is more pressurised than the compressed air stream 34, and, whether upstream or downstream the tail gas heater 43, retains a pressure ranging from 9 to 16 bar. Hence, upon mixing the stream tail gas **10** in fluid communication with the compressed air stream **34** with the compressed air stream 34, less power is required to provide the necessary total amount of compressed gas to the mixing apparatus 35. By ensuring that the temperature in the burner is maintained in the range of 800 to 950 °C, it is ensured that, despite less power being produced from the tail gas expander 7 due to less tail gas **5** being expanded and the demand on the NOₓ gas compressor **40**, a net reduction of the power consumption by the compressor train is retained. In addition, it is ensured that the oxygen and ammonia concentrations in the ammonia converter 37 allow for the production of nitric acid of a commercial grade.

In addition to the net saving in the power consumption by the air compressor mentioned above, the inventors have identified that, the recirculation of part of the tail gas **5** results in the temperature of the gaseous NOₓ stream **15** at the outlet of the ammonia converter **37** is such that the heat exchange between the NOₓ gas stream **15** and the tail gas **5** is more efficient: hence, in case the tail gas heater is present and the tail gas 5 is heated, the size of the heat exchanger 43 and of the cooler 38 can be decreased.

In one embodiment according to the system of the disclosure, the system further comprises a tail gas heater 43, having an inlet 46 in fluid communication with the absorption tail gas outlet 6 and an outlet 47 in fluid communication with the tail gas expander inlet 8, positioned upstream from the water cooler/condenser 38 for heating the tail gas 5 coming from the absorption tower **41** to a temperature ranging between 200 to 650 °C with the heat from the NOₓ gas/steam mixture 15 coming from the ammonia converter 37, and wherein means for splitting 55 the tail gas 5 is positioned upstream from the tail gas heater 43.

In one embodiment according to the system of the disclosure, the system further comprises a tail gas heater 43, having an inlet 46 in fluid communication with the absorption tail gas outlet 6 and an outlet 47 in fluid communication with the tail gas expander inlet 8, positioned upstream from the water cooler/condenser 38 for heating the tail gas 5 coming from the absorption tower **41** to a temperature ranging between 200 to 650 °C with the heat from the NOₓ gas/steam mixture **15** coming from the ammonia converter **37**, and wherein means for splitting **55** the tail gas **5** is positioned downstream from the tail gas heater **43**..

The person skilled in the art will understand that this is possible to recirculate to the ammonia converter 37 either one of the tail gas 5 or the heated tail gas 5 in fluid communication with the tail gas expander inlet 8.

The choice of the point from which the tail gas 5 is recirculated, that is upstream or downstream the tail gas heater 43, influences the temperature of the gas mixture 14, and thereby, the efficiency of the combustion in the burner. The system of the disclosure provides the necessary flexibility for the person skilled in the art to choose where to recirculate the tail gas 5 from. Thereby, he/she can achieve the optimal temperature for the gas mixture 14, depending on parameters including, for example, the gas volume flown to or the catalyst present in the converter 37, as well as the ratio of oxygen to ammonia in the gas mixture 14.

In one embodiment according to the system of the disclosure, the source of pressurised oxygen-rich gas 50 is supplied by a high pressure water electrolyser.

A water electrolyser is a device for the electrolysis of water, being the decomposition of water into oxygen and hydrogen gas, due to the passage of an electric current there through. This technique can be used to make hydrogen gas, a main component of hydrogen fuel, and oxygen gas. A suitable high pressure water electrolyser may comprise of an anode producing oxygen gas according to the reaction
2 OH- = H₂O + ½ O₂ + 2 e-;
a cathode, producing hydrogen gas according to the reaction
2 H₂O + 2 e- = H₂ + 2 OH- ;
an electrolyte consisting of an alkaline solution such as potassium hydroxide; and a porous diaphragm separating the anode and the cathode, in order to avoid the mixing of hydrogen gas and oxygen gas that together form an explosive mixture. Alternatively, the anode and the cathode may be separated by a solid polymer electrolyte such as the fluoropolymer Nafion, where the electrolyte provides the selective transport of protons from the anode to the cathode, as well as the electrical insulation between the anode and the cathode, and avoids the mixing of hydrogen gas and oxygen gas that together form an explosive mixture. The anode and cathode can be made of nickel or steel, or mixtures thereof. Alternatively, for the purpose of enhancing the electrode reactions, the anode and cathode may contain catalysts that can be made of Iridium and Platinum, respectively. The diaphragm of an electrically insulating material is based on, for example, zirconia. The diaphragm has a porosity such that it forms a barrier against transport of hydrogen and oxygen gas bubbles, while containing a continuum of penetrated liquid electrolyte. An anode-diaphragm-cathode assembly constitutes an electrolysis cell. Electrolysis cells are piled in series in stacks that compose the core of an electrolyser. The hydrogen and oxygen production for a given stack volume is proportional to the current density and inversely proportional to the stacking distance. Regardless of stack volume, the hydrogen and oxygen production is proportional to the total current. In addition to the stack, the electrolyser comprises auxiliaries such as a current rectifier, a water demineralization unit, a water pump and a cooling system, a hydrogen purification unit, and instrumentation.

The electrolyser is operated by applying a voltage corresponding to the standard potential plus the overpotential over each cell. The total voltage depends on the total number of cells of which the electrolyser is comprised. OH- ions generated at the cathode migrate through the electrolyte in the diaphragm to the anode, where they are consumed by the anode reaction. Electrons travel the opposite direction in an external circuit. The electrolyser may be operated at a temperature of 50 to 80 °C, or 60 to 80 °C, and a gas pressure of 9 to 30 bar, preferably 15 to 30 bar.

A high pressure water electrolyser hence results in the production of pressurised hydrogen at the cathode and pressurised oxygen at the anode. What is required to perform high pressure electrolysis is to pressurize the water used in the electrolysis process. As pressurising water requires less power than pressuring a gas, the use of a high pressure water electrolyser results in the production of pressurised oxygen-rich gas **50** at minimized power consumption.

Reference is made to Figure 3. In one embodiment according to the system of the disclosure, the system further comprises a source of oxygen-rich gas **54** having a pressure at least equal to atmospheric pressure, in fluid communication with the inlet **48** of the air compressor 36.

The presence of the source of oxygen-rich gas 54 implies that less air is to be pressurised in order to achieve the content of oxygen achieved in the prior art process at the outlet of the air compressor 36. As a result, the power demand on the air compressor 36 is reduced.

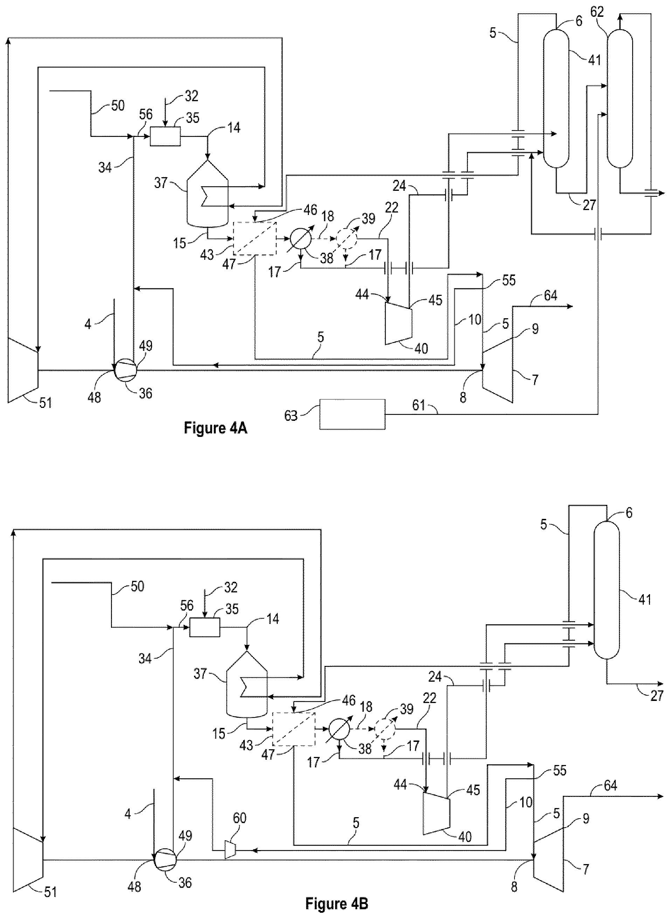

Reference is made to Figures 4A-C. In one embodiment according to the system of the disclosure, the system further comprises an additional source of pressurised oxygen-rich gas **61** in fluid communication with an area downstream the NOₓ gas compressor **40**; or a gas ejector 56 having a first inlet **57** in fluid communication with the stream of tail gas **10** in fluid communication with the compressed air stream **34**, a second inlet **58** in fluid communication with a source of air or oxygen-rich gas at a pressure lower than P1, the expanded tail gas **64** or the gaseous NOₓ stream **22**, and an outlet **59** in fluid communication with the compressed air stream 34; or an additional tail gas expander 60 in fluid communication with the stream of tail gas 10 in fluid communication with the compressed air stream 34.

The presence of an additional source of pressurised oxygen-rich gas **61** downstream the NOx gas compressor **40** presents benefits. Indeed, a reduction in the power demand by the NOₓ gas compressor **40** is achieved. Furthermore, when additional pressurised oxygen-rich gas **61** is supplied downstream the NOₓ gas compressor **40** but upstream the absorption tower **41**, the absorption of NOₓ gases in the absorption tower **41** is improved which results in additional nitric acid production and reduction of the emissions to the atmosphere. In addition, or alternatively, the size of the absorption tower **41** can be reduced. When additional pressurised oxygen-rich gas is supplied downstream the absorption tower **41**, less air is to be pressurised in order to achieve the content of oxygen achieved in the prior art process at the outlet of the air compressor 36. Further, additional power will be generated through the tail gas expander 7. As a result, the power demand on the compressor train 36 is reduced.

The presence of an additional tail gas expander 60 enables energy recovery from the stream of tail gas 10 in fluid communication with the compressed air stream 34, hence minimizing the loss of energy, due to part of the tail gas gas 5 being splitted upstream the tail gas expander 7. As a result, the net power consumption by the compressor train is reduced.

The presence of a gas ejector 56 using the stream of tail gas 10 in fluid communication with the compressed air stream 34 as the motive gas also presents benefits, including a reduction in the net power consumption by the compressor train. The mixing of air or oxygen with the stream of tail gas 10 in fluid communication with the compressed air stream 34 in the gas ejector 56 also for a reduction of the amount of air that is to be pressurised, in order to achieve the content of oxygen achieved in the prior art process at the outlet of the air compressor **36**. As a result, the power demand on the air compressor **36** is reduced. The gaseous NOₓ stream **22**, upstream the NOₓ gas compressor **40**, has a pressure that is lower than P1. Therefore, the gaseous NOₓ stream **22** can be mixed with stream of tail gas **10** in the gas ejector **56**, the stream of tail gas **10** in fluid communication with the compressed air stream 34 being used as the motive gas. The mass flow of the compressed air stream 34 is thereby increased, which provides means for controlling the oxygen to ammonia ratio and the temperature in the ammonia converter 37.

Reference is made to Figure 4A. In one embodiment according to the system of the disclosure, the system further comprises a high pressure bleacher 62 in fluid communication with the absorption tower **41** for removing NOx gases from the stream of raw nitric acid-containing residual NOₓ gas **27**; and a high pressure water electrolyser **63** in fluid connection with the high pressure bleacher **62**; wherein the additional source of pressurised oxygen-rich-gas 61 is the electrolyser 63 and is in fluid communication with the high pressure bleacher 62 and, in turn, with the absorption tower 41 and an area downstream the NOx gas compressor 40 and upstream the absorption tower 41.

As defined herein, a high pressure bleacher is a bleacher operating with pressurised oxygen-rich gas as the stripping gas. The person skilled in the art will nonetheless understand that bleaching can be performed at any pressure, as long as the pressure of the stream resulting from mixing the bleaching gases leaving the bleacher **62** with the compressed NOₓ gas stream **24** results in a pressure ranging from 9 to 16 bar at the inlet of the absorption tower **41**.

In a conventional dual pressure nitric acid plant, the bleacher 62 provides oxygen to the absorption tower 41. A first advantage is that less secondary air must be compressed and supplied by the air compressor 36 to the bleacher 57, which results in savings in the power demand by the air compressor **36**. Moreover, when the bleacher **62** is supplied with an oxygen-rich gas **61**, the absorption of the NOₓ gases in the absorption tower **41** is improved, which results in additional nitric production and reduction of the emissions to the atmosphere. In addition, or alternatively, the size of the absorption tower 41 can be reduced. Also, a reduction in the power demand by the NOₓ gas compressor **40** is achieved. Furthermore, if the oxygen-rich gas **61** is pressurised, the absorption of NOₓ gases in the absorption tower 41 is further increased through the increase of the partial pressure of oxygen in the absorption tower 41. Hence, if pressurised oxygen-rich gas 61 is supplied by a high pressure water electrolyser **63**, optimal absorption in the absorption tower **41** is achieved at minimum power demand for producing the pressurised oxygen-rich gas **61**: the high pressure water electrolyser 63 will result in the production of pressurised oxygen-rich gas 61 from pressurised water, which is less power consuming than pressurising oxygen gas. Advantageously, the pressurised oxygen-rich gas produced by the high pressure water electrolyser **63** can be the source of both streams **50** and **61**, and also a source of pressurised oxygen-rich gas for being sent downstream the NOₓ compressor **40** and upstream the absorption tower **41**.

### Method for producing nitric acid

Reference is made to Figures 2A and 2B. In one aspect of the disclosure, a method for producing nitric acid at reduced power consumption is disclosed. The method comprises the steps of a) compressing air in an air compressor **36**) thereby producing a compressed air stream 34; b) mixing pressurised oxygen-rich gas 50 having a pressure higher than the pressure of the compressed air stream with the compressed air stream 34, thereby obtaining an oxygen-rich gas/compressed air stream mixture 53; c) mixing the oxygen-rich gas/compressed air stream mixture 53 with an ammonia gas stream 32 in a mixing apparatus 35, thereby producing an ammonia/oxygen-enriched air mixture 14, such as to achieve an oxygen to ammonia molar ratio ranging from 1.3 to 9; d) oxidising ammonia in the ammonia/oxygen-enriched air mixture **14** in an ammonia converter **37** at 800 to 950 °C, thereby producing a gaseous NOₓ gas/steam mixture **15**, comprising water and nitric oxide; e) converting the steam generated in the ammonia converter **37** or from the gaseous NOₓ gas/steam mixture **15** into power; f) separating and condensing steam from NOₓ gas in the gaseous NOₓ gas/steam mixture **15**, thereby generating an aqueous diluted nitric acid mixture **17** and a gaseous NOₓ stream **22**, in a water cooler/condenser **38**; g) compressing the gaseous NOₓ stream **22**, thereby producing a compressed NOₓ gas stream **24**, in a NOₓ gas compressor **40**; h) absorbing the gaseous NOₓ stream **22** in an absorption tower **41**, thereby producing a a stream of raw nitric acid-containing residual NOₓ gas **27** and a tail gas **5** comprising NOₓ gases; and i) expanding the tail gas **5** in a tail gas expander **7**, thereby generating an expanded tail gas **64**;

The method is characterised in that it further comprises the steps of j) mixing part of the tail gas **5** obtained from step h) at a pressure P1 with the compressed air stream **34**, thereby generating a fluid communication between a stream of tail gas **10** and the compressed air stream (34); k) measuring the temperature in the ammonia converter 37; and I) adjusting the amount of the total gas volume mixed in step j) if the temperature measured in step k) is outside the range of 800-950 °C, such that the temperature in the ammonia converter is maintained in the range of 800 and 950 °C.

Reference is made to Figure 4A. The inventors have realised that upon recirculating part of the tail gas 5 to the compressed air stream 34, downstream the air compressor 36 and upstream the ammonia converter 37, while at the same time feeding pressurised oxygen 50 to the compressed air stream **34**, and maintaining the temperature in the ammonia converter **37** in the range of 800 to 950 °C and the oxygen to ammonia molar ratio in the ammonia converter **37** between 1.3 and 9, net reduction of the power consumption by the air compressor is achieved. Indeed the tail gas 5 leaving the absorption tower 41 is more pressurised than the compressed air stream 34, and, whether upstream or downstream the tail gas heater 43, retains a pressure ranging from 9 to 16 bar. Hence, upon mixing the stream of tail gas 10 in fluid communication with the compressed air stream 34 with the compressed air stream 34, less power is required to provide the necessary total amount of compressed gas to the mixing apparatus 35. By ensuring that the temperature in the burner is maintained in the range from 800 to 950 °C, it is ensured that, despite the reduced power production from the tail gas expander and the demand on the NOₓ gas compressor **40**, a net reduction of the power by the compressor train is retained. In addition, it is ensured that the oxygen and ammonia concentrations in the ammonia converter 37 allow for the production of nitric acid of a commercial grade.

In addition to the net saving in the power consumption by the air compressor mentioned above, the inventors have identified that, the recirculation of part of the tail gas 5 results in the temperature of the gaseous NOₓ stream **15** at the outlet of the ammonia converter **37** is such that the heat exchange between the NOₓ gas stream **15** and the tail gas **5** is more efficient: hence, in case the tail gas heater is present and the tail gas **5** is heated, the size of the heat exchanger 43 and of the cooler 38 can be decreased.

In one embodiment according to the method of the disclosure, the method further comprising the step of m) heating the tail gas **5** obtained in step h) to a temperature ranging from 200 to 650 °C in a tail gas heater **43** positioned upstream from the water cooler/condenser **38** with the heat from the NOₓ gas/steam mixture **15** coming from the ammonia converter **37**.

In one embodiment according to the method of the disclosure, the method further comprises the step of m) heating the tail gas **5** obtained in step h) to a temperature ranging from 200 to 650 °C in a tail gas heater **43** positioned upstream from the water cooler/condenser **38** with the heat from the NOₓ gas/steam mixture **15** coming from the ammonia converter **37**, wherein, in step h), part of the tail gas **5** obtained in step h) or in step m) is pressurised.

The person skilled in the art will understand that this is possible to recirculate to the ammonia converter 37 either one of the tail gas 5 or the heated tail gas 5 in fluid communication with the tail gas expander inlet 8, or a mixture thereof.

The choice of the point from which the tail gas 5 is recirculated, that is upstream or downstream the tail gas heater 43, influences the temperature of the gas mixture 14, and thereby, the efficiency of the combustion in the burner. The system of the disclosure provides the necessary flexibility for the person skilled in the art to choose where to recirculate the tail gas 5 from. Thereby, he/she can achieve the optimal temperature for the gas mixture 14, depending on parameters including, for example, the gas volume flown to or the catalyst present in the converter 37, as well as the ratio of oxygen to ammonia in the gas mixture 14.

In one embodiment according to the method of the disclosure, the method further comprises the step of n) operating a high pressure water electrolyser in order to produce the oxygen gas 50 used in the mixing step j).

A high pressure water electrolyser hence results in the production of pressurised hydrogen at the cathode and pressurised oxygen at the anode. What is required to perform high pressure electrolysis is to pressurize the water used in the electrolysis process. As pressurising water requires less power than pressuring a gas, the use of a high pressure water electrolyser results in the production of pressurised oxygen-rich gas 50 at minimized power consumption.

Reference is made to Figure 3. In one embodiment according to the method of the disclosure, the method further comprises the step of o) sending an oxygen-rich gas having a pressure at least equal to atmospheric pressure 54 to the inlet 48 of the air compressor 36.

The presence of the source of oxygen-rich gas 54 implies that less air is to be pressurised in order to achieve the content of oxygen achieved in the prior art process at the outlet of the air compressor 36. As a result, the power demand on the air compressor 36 is reduced.

Reference is made to Figures 4A-4C. In one embodiment according to the method of the disclosure, the method further comprises the steps of p) feeding an additional source of pressurised oxygen-rich gas **61** downstream the NOₓ gas compressor **40**; or operating a gas ejector **56** having a first inlet **57**, a second inlet **58** and an outlet **59**, by flowing the stream of tail gas 10 in fluid communication with the compressed air stream 34 to the first inlet 57, flowing a source of air or oxygen-rich gas at a pressure lower than P1, the expanded tail gas **64** or the gaseous NOₓ stream **22** to the second inlet **59**, and by ejecting the gas mixture at the outlet **59** to the compressed air stream **34**; or expanding the stream of tail gas **10** in fluid communication with the compressed air stream **34** in an additional tail gas expander **60.**

The presence of an additional source of pressurised oxygen-rich gas **61** downstream the NOx gas compressor **40** presents benefits. Indeed, a reduction in the power demand by the NOₓ gas compressor **40** is achieved. Furthermore, when additional pressurised oxygen-rich gas **61** is supplied downstream the NOₓ gas compressor **40** but upstream the absorption tower **41**, the absorption of NOₓ gases in the absorption tower **41** is improved which results in additional nitric production and reduction of the emissions to the atmosphere. In addition, or alternatively, the size of the absorption tower **41** can be reduced. When additional pressurised oxygen-rich gas is supplied downstream the absorption tower 41, less air is to be pressurised in order to achieve the content of oxygen achieved in the prior art process at the outlet of the air compressor 36. Further, additional power will be generated through the tail gas expander 7. As a result, the power demand on the compressor train 36 is reduced.

Expanding the stream of tail gas 10 in fluid communication with the compressed air stream 34 in an additional tail gas expander 60 enables energy recovery, hence minimizing the loss of energy, due to part of the tail gas 5 being splitted upstream the tail gas expander 7. As a result, the net power consumption by the compressor train is reduced.

Using a gas ejector 56 having the stream of tail gas 10 in fluid communication with the compressed air stream 34 as the motive gas, also presents benefits, including a reduction in the net power consumption by the compressor train. The mixing of air or oxygen with the stream of tail gas 10 in fluid communication with the compressed air stream 34 in the gas ejector 56 also allows for a reduction of the amount of air that is to be pressurised, in order to achieve the content of oxygen achieved in the prior art process at the outlet of the air compressor **36**. As a result, the power demand on the air compressor **36** is reduced. The gaseous NOₓ stream **22**, upstream the NOₓ gas compressor **40**, has a pressure that is lower than P1. Therefore, the gaseous NOₓ stream **22** can be mixed with the stream of tail gas **10** in the gas ejector **56**, the stream of tail gas **10** in fluid communication with the compressed air stream 34 being used as the motive gas. The mass flow of the compressed air stream 34 is thereby increased, which provides means for controlling the oxygen to ammonia ratio and the temperature in the ammonia converter 37.

Reference is made to Figure 4A. In one embodiment according to the method of the disclosure, the method further comprises the steps of q) operating a high pressure bleacher **62** in fluid communication with the absorption tower **41**, thereby removing NOx gases from the stream of raw nitric acid-containing residual NOₓ gas **27**; r) operating a high pressure water electrolyser **63**, thereby producing the source of pressurised oxygen-rich-gas **61**; and s) supplying the source of pressurised oxygen-rich-gas 61 to the high pressure bleacher 62 and, in turn, to the absorption tower 41 and to an area downstream the NO_{X} gas compressor 40 and upstream the absorption tower 41.

As defined herein, a high pressure bleacher is a bleacher operating with pressurised oxygen-rich gas as the stripping gas. The person skilled in the art will nonetheless understand that bleaching can be performed at any pressure, as long as the pressure of the stream resulting from mixing the bleaching gases leaving the bleacher 62 with the compressed NOₓ gas stream 24 results in a pressure ranging from 9 to 16 bar at the inlet of the absorption tower 41.

In a conventional dual pressure nitric acid plant, the bleacher 62 provides oxygen to the absorption tower 41. A first advantage is that less secondary air must be compressed and supplied by the air compressor 36 to the bleacher 57, which results in savings in the power demand by the air compressor **36**. Moreover, when the bleacher **62** is supplied with an oxygen-rich gas **61**, the absorption of the NOₓ gases in the absorption tower **41** is improved, which results in additional nitric production and reduction of the emissions to the atmosphere. In addition, or alternatively, the size of the absorption tower 41 can be reduced. Furthermore, if the oxygen-rich gas 61 is pressurised, the absorption of NOₓ gases in the absorption tower **41** is further increased through the increase of the partial pressure of oxygen in the absorption tower 41. Hence, if pressurised oxygen-rich gas 61 is supplied by a high pressure water electrolyser 63, optimal absorption in the absorption tower 41 is achieved at minimum power demand for producing the pressurised oxygen-rich gas 61: the high pressure water electrolyser 63 will result in the production of pressurised oxygen-rich gas 61 from pressurised water, which is less power consuming than pressurising oxygen gas. Advantageously, the pressurised oxygen-rich gas produced by the high pressure water electrolyser **63** can be the source of both streams **50** and **61**, and also a source of pressurised oxygen-rich gas for being sent downstream the NOₓ compressor **40** and upstream the absorption tower **41**.

### Use of the system of the disclosure

In one aspect of the disclosure, the use of the system of the disclosure for performing the method of the disclosure is disclosed.

### Method for revamping

In one aspect of the disclosure, a method for revamping a system for producing nitric acid comprising an air compressor **36** for compressing air, comprising an inlet **48** and an outlet **49**, to provide in a compressed air stream **34**; a source of pressurised oxygen-rich gas **50** having a pressure higher than the pressure of the compressed air stream 34, in fluid communication with the compressed air stream 34, to provide in an oxygen-rich gas/compressed air stream mixture 53; a mixing apparatus 35 for mixing the oxygen-rich gas/compressed air stream mixture 53 with an ammonia gas stream 32, to provide in an ammonia/oxygen-enriched air mixture **14**; an ammonia converter **37** for oxidising ammonia in the ammonia/oxygen-enriched air mixture **14**, to provide in a NOₓ gas/steam mixture **15**, comprising water and nitric oxide; means for measuring (not shown) the temperature in the ammonia converter 37; means for regulating the concentration of ammonia and of oxygen in the ammonia converter 37; a steam turbine 51 or an electric motor and means for converting steam into electricity, for converting steam into power, in fluid communication with the ammonia converter 37 or the NOₓ/gas steam mixture 15; a water cooler/condenser 38 and, optionally, a cooler/separator 39, wherein the water cooler/condenser 38 is located upstream the cooler/separator **39**, for separating and condensing steam from NOₓ gas in the gaseous NOₓ gas/steam mixture **15**, thereby generating an aqueous diluted nitric acid mixture **17** and a gaseous NOₓ stream 22; a NOₓ gas compressor 40, for compressing the gaseous NOₓ stream **22**, to provide in a compressed NOₓ gas stream **24**; an absorption tower **41** downstream the NOₓ gas compressor **40** for absorbing the NOₓ gases from the compressed NOₓ gas stream **24** in water, to provide in a stream of raw nitric acid-containing residual NOₓ gas **27** and a tail gas **5** comprising NOₓ gases, comprising an absorption tower tail gas outlet 6 for evacuating the tail gas 5; a tail gas expander 7 for expanding the tail gas, thereby generating an expanded tail gas 64, downstream of the absorption tower comprising a tail gas expander inlet 8 in fluid communication with the absorption tower tail gas outlet 6, and a tail gas expander outlet 9; and optionally, a tail gas heater 43 upstream the water cooler/condenser 38 and, optionally, the cooler/separator 39, for heating the tail gas 5 to a temperature ranging from 200 to 650 °C, and comprising a tail gas heater inlet 46 and a tail gas heater outlet 47, wherein the tail gas heater inlet 46 is in fluid communication with the absorption tail gas outlet 6, and wherein the tail gas heater outlet 47 is in fluid communication with the tail gas expander inlet 8; into a system according to the system of the disclosure, is disclosed.

The method comprises the steps of introducing means for splitting 55 the tail gas 5 into a tail gas stream 5 in fluid communication with the tail gas expander inlet 8 and a tail gas stream 10 in fluid communication with the compressed air stream 34; and introducing means for adjusting the amount of tail gas 5 being splitted into the tail gas stream 5 in fluid communication with the tail gas expander inlet 8 and the tail gas stream 10 in fluid communication with the compressed air stream 34.

As defined herein, means for adjusting the oxygen to ammonia molar ratio are any suitable means for assessing the amount of ammonia to be introduced in the system from a measure of the oxygen concentration, or the amount of oxygen to be introduced in the system from a value of the ammonia concentration, such that the oxygen to ammonia molar ratio will range from 1.3 to 9. The oxygen or ammonia concentration can be determined, for example, from a measurement in the gas phase using a process gas analyser. The oxygen or ammonia concentration can also be determined from computing using the concentration of the oxygen- or ammonia source being introduced in the system, the flow at which the source is introduced in the system, and the relative flow values of the gases with which the source is mixed. Using the oxygen or ammonia concentration, the relevant flow of ammonia or oxygen respectively to be introduced in the system is, in turn, determined and is used in controlling the flow of ammonia or oxygen, from gaseous sources of ammonia or oxygen respectively at pre-determined concentrations. Controlling of the flow of gaseous ammonia or oxygen can, for example, be achieved through flow control valves. In particular, the means is an integrated process control system, in which the concentration of oxygen or ammonia respectively is measured, and the relevant flow of ammonia or oxygen respectively is thereby determined, thus controlling the flow of ammonia or oxygen, from gaseous sources of ammonia or oxygen respectively at pre-determined concentrations.

As defined herein, means for measuring the temperature are any means suitable for measuring and indicating the temperature in the ammonia oxidation burner. In particular, the means for measuring the temperature is a thermocouple or a thermometer suitable for measuring and indicating a temperature ranging as high as 1000 °C. More in particular, the means for measuring the temperature is an infrared thermometer for measuring and indicating a temperature ranging as high as 1000 °C.

As defined herein, means for converting steam into power are any mean for achieving power from steam. In particular those means are a steam turbine connected to an electric generator.

As defined herein, means for splitting are any means suitable for splitting the tail gas **5** such as to generate, in addition to the tail gas **5**, another gas stream **10** of tail gas. In particular, the means for splitting is a T-connection having one inlet and two outlets, such that a gas flowing through the inlet of the T-connection is splitted into two gas streams of identical chemical composition.

As defined herein, means for adjusting the amount of tail gas 5 being splitted into the stream of tail gas **10** in fluid communication with the compressed air stream **34** and the tail gas 5 in fluid communication with the tail gas expander inlet 8, are any means for controlling the splitting in the means for splitting 55. In particular, the means for splitting 55 is a T-connection as described above and the means for adjusting is an orifice or a guide vane or a flow control valve at one or both of the outlets of the T-connection. Even more in particular, the means is an integrated process control system, in which the temperature in the ammonia converter **37** is determined through the means for measuring the temperature. The temperature in the ammonia converter **37** is then used for controlling a flow control valve in the means for splitting 55, thereby controlling the splitting of the tail gas 5, in order for the measured temperature to be maintained in the range 800-950 °C.

### Examples

### 1. Recirculation of tail gas at 24% and use of an additional tail gas expander

Reference is made to Figure 4B. Ambient air 4 was compressed in an air compressor 36, generating the compressed air stream 34. Pressurized oxygen-rich gas **50** at a pressure of 8 bar was mixed with the compressed air stream 34, thereby producing an oxygen-rich gas/compressed air stream mixture 53. Ammonia **32** was mixed with the oxygen-rich gas/compressed air stream mixture 53 in a mixing apparatus 35, such as to achieve an oxygen to ammonia molar ration ranging from 1.3 to 9. The resulting ammonia/oxygen-enriched air mixture **14** was fed to an ammonia converter **37**, at a temperature ranging from 800 to 950 °C and operating at a pressure of 5.2 bar. In the ammonia converter **37**, ammonia was oxidized over a mixed platinum/rhodium catalyst, thus obtaining a low-pressure NOₓ gas/steam mixture **15**, comprising water and nitric oxide (NO). The heat of the mixture coming out of the ammonia converter was recovered using the steam turbine **51** and also by heating the tail gas **5** as is described below. The NOₓ gas/stream mixture was subsequently cooled down in a water cooler/condenser 38 to temperature where the water condenses, and an aqueous diluted nitric acid mixture **17** was separated from a gaseous NOₓ stream **18**. Subsequently, the gaseous NOₓ stream was further oxidized to further convert the NO to NO₂ and N₂O₄, and cooled down again in a cooler/separator **39** to separate out a another aqueous diluted nitric acid mixture **17** which was directed to an absorption tower **41.** On the other end, the gaseous NOₓ stream **22** was compressed in the NOx gas compressor **40** to a pressure of 12 bar, thereby producing the pressurised NOₓ gaseous stream **24**. The pressurised NOₓ gaseous stream **24** was sent to the absorber unit **6** too. Inside the absorber unit **6**, the NOₓ gas reacted with water to produce the tail gas **5** and a stream of raw nitric acid also containing residual NOₓ gas, which was fed to a bleacher (not shown). The heat from the gaseous NOₓ stream **24** was used for heating the tail gas **5** in the tail gas heater **43** to 575 °C. The heated tail gas stream 5 was splitted over a T-tube, such that 24% of the heated tail gas 5 was splitted, thereby producing the heated tail gas 10. The heated tail gas 10 was expanded over an additional tail gas expander 60, then mixed with the compressed air stream 34. The temperature inside the ammonia converter 37 was measured and established to have remained in the range of 800 to 950 °C. The residual 76% of tail gas 5 was sent to the tail gas expander **7**. The residual NOₓ gas in the raw nitric acid stream **27** was then stripped out with a gaseous medium (not shown) such as an oxygen-containing gas or air, inside the bleacher unit (not shown), operating at about the same pressure as the ammonia converter of 5.2 bar. The drive power for both the air compressor **36** and the NOₓ compressor **40** originated from the tail gas expander **7**, the additional tail gas expander **60** and the steam turbine **51**. The net power associated to the air compressors **36**, the NOₓ gas compressor **40** , the tail gas expander **7** and the additional tail gas expander **60** was 37 kW/h/t 100% HNO₃. This power was produced by the steam turbine **51**.

### 2. Recirculation of tail gas at 42% and use of a gas ejector

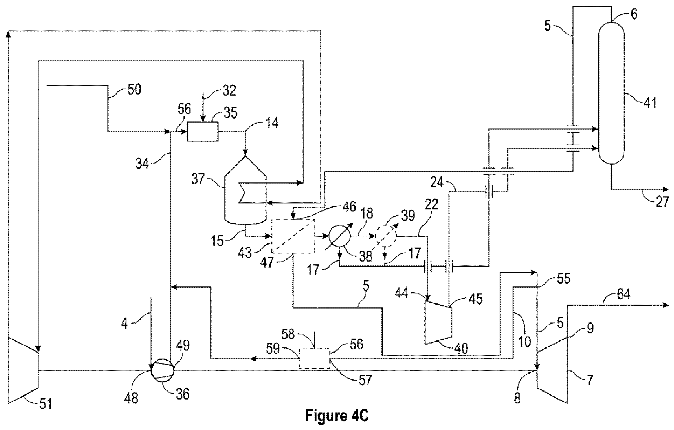

Reference is made to Figure 4C. Ambient air 4 was compressed in an air compressor 36, generating the compressed air stream 34. Pressurized oxygen-rich gas 50 at a pressure of 8 bar was mixed with the compressed air stream 34, thereby producing an oxygen-rich gas/compressed air stream mixture 53. Ammonia 32 was mixed with the oxygen-rich gas/compressed air stream mixture 53 in a mixing apparatus 35, such as to achieve an oxygen to ammonia molar ration ranging from 1.3 to 9. The resulting ammonia/oxygen-enriched air mixture **14** was fed to an ammonia converter **37**, at a temperature ranging from 800 to 950 °C and operating at a pressure of 5.2 bar. In the ammonia converter **37**, ammonia was oxidized over a mixed platinum/rhodium catalyst, thus obtaining a low-pressure NOₓ gas/steam mixture **15**, comprising water and nitric oxide (NO). The heat of the mixture coming out of the ammonia converter was recovered using the steam turbine **51** and also by heating the tail gas **5** as is described below. The NOₓ gas/stream mixture was subsequently cooled down in a water cooler/condenser **38** to temperature where the water condenses, and an aqueous diluted nitric acid mixture **17** was separated from a gaseous NOₓ stream **18**. Subsequently, the LP gaseous NOₓ stream was further oxidized to further convert the NO to NO₂ and N₂O₄, and cooled down again in a cooler/separator **39** to separate out a another aqueous diluted nitric acid mixture **17** which was directed to an absorption tower **41**. On the other end, the gaseous NOₓ stream **22** was compressed in the NOx gas compressor **40** to a pressure of 12 bar, thereby producing the pressurised NOₓ gaseous stream 24. The pressurised NOₓ gaseous stream 24 was sent to the absorber unit 6 too. Inside the absorber unit 6, the NOₓ gas reacted with water to produce the tail gas 5 and a stream of raw nitric acid also containing residual NOₓ gas, which was fed to a bleacher (not shown). The heat from the gaseous NOₓ stream **24** was used for heating the tail gas **5** in the tail gas heater **43** to 575 °C. The heated tail gas stream 5 was splitted over a T-tube, such that 42% of the heated tail gas **5** was splitted, thereby producing the heated tail gas **10**. The heated tail gas **10** was used as the motive gas and introduced in a gas ejector **56** at an inlet **58.** The gaseous NOₓ stream 22 was introduced at the inlet 58 of the gas ejector 56. The gases coming out of the outlet 59 of the gas ejector 56 were then mixed with the compressed air stream 34. The temperature inside the ammonia converter 37 was measured and established to have remained in the range of 800 to 950 °C. The residual 58% of tail gas 5 was sent to the tail gas expander **7**. The residual NOₓ gas in the raw nitric acid stream **27** was then stripped out with a gaseous medium (not shown) such as an oxygen-containing gas or air, inside the bleacher unit (not shown) generally operated at about the same pressure as the ammonia converter of 5.2 bar. The drive power for both the air compressor 36 and the NOx gas compressor 40 originated from the tail gas expander 7 and the steam turbine 51. The net power associated to the air compressor 36, the NOx gas compressor 40 and the tail gas expander 7 was 64 kWh/t 100% HNO₃. This power was produced by the steam turbine 51.

### 3. Comparative example: no recirculation of tail gas

Ambient air 4 was compressed in an air compressor 36, generating the compressed air stream 34. Ammonia 32 was mixed with the oxygen-rich gas/compressed air stream mixture 53, in a mixing apparatus 35, and the resulting ammonia/oxygen-enriched air mixture 14 was fed to an ammonia converter 37, operating at a pressure of 5.2 bar. In the ammonia converter 37, ammonia was oxidized over a mixed platinum/rhodium catalyst, thus obtaining a low-pressure NOₓ gas/steam mixture **15**, comprising water and nitric oxide (NO). The heat of the mixture coming out of the ammonia converter was recovered using the steam turbine **51**. The NOₓ gas/stream mixture was subsequently cooled down in a water cooler/condenser **38** to temperature where the water condenses, and an aqueous diluted nitric acid mixture **17** was separated from a gaseous NOₓ stream **18**. Subsequently, the LP gaseous NOₓ stream was further oxidized to further convert the NO to NO₂ and N₂O₄, and cooled down again in a cooler/separator **39** to separate out a another aqueous diluted nitric acid mixture **17** which was directed to an absorption tower **41**. On the other end, the gaseous NOₓ stream **22** was compressed in the NOx gas compressor **40** to a pressure of 12 bar, thereby producing the pressurised NOₓ gaseous stream **24**. The pressurised NOₓ gaseous stream **24** was sent to the absorber unit **6** too. Inside the absorber unit **6**, the high pressure NOₓ gas reacted with water to produce the tail gas **5** and a stream of raw nitric acid also containing residual NOₓ gas, which was fed to a bleacher (not shown). The heat from the gaseous NOₓ stream **24** was used for heating the tail gas **5** in the tail gas heater **43** to 450 °C. The entire tail gas stream 5 was sent to the tail gas expander 7. The residual NOₓ gas in the raw nitric acid stream 27 was then stripped out with a gaseous medium (not shown) such as an oxygen-containing gas or air, inside the bleacher unit (not shown), operating at low pressure; the bleacher unit was generally operated at about the same pressure as the ammonia converter, of 5.2 bar. The drive power for the air compressor 36 and the NOx compressor 40 originated from the tail gas expander 7 and the steam turbine 51. The net power associated to the air compressor 36, the NOx compressor 40 and the tail gas expander 7 was 75.5 kW/h/t 100% HNO₃. This power was produced by the steam turbine 51.

Therefore, when compared to the example 1, a net power of 39 kWh/t 100% HNO₃(50%) was saved upon recirculating 24% of the tail gas.

Therefore, when compared to the example 2, a net power of 12 kWh/t 100% HNO₃ (16%) was saved upon recirculating 42% of the tail gas.

## Claims

1. A system for producing nitric acid at reduced power consumption, comprising:
• an air compressor (36) for compressing air, comprising an inlet (48) and an outlet (49), to provide in a compressed air stream (**34**);
• a source of pressurised oxygen-rich gas (**50**) having a pressure higher than the pressure of the compressed air stream (**34**), in fluid communication with the compressed air stream (**34**), thereby yielding an oxygen-rich gas/compressed air stream mixture (53);
• a mixing apparatus (**35**) for mixing the oxygen-rich gas/compressed air stream mixture (**53**) with an ammonia gas stream (**32**), to provide in an ammonia/oxygen-enriched air mixture (14);an ammonia converter (37) for oxidising ammonia in the ammonia/oxygen-enriched air mixture (**14**), to provide in a NOₓ gas/steam mixture (**15**), comprising water and nitric oxide;
• means for measuring the temperature in the ammonia converter (**37**);
• means for regulating the concentration of ammonia and of oxygen in the ammonia converter (**37**);
• a steam turbine (**51**) or an electric motor and means for converting steam into electricity, for converting steam into power, in fluid communication with the ammonia converter **(37)** or the NOₓ/gas steam mixture (**15**);
• a water cooler/condenser (**38**), for separating and condensing steam from NOₓ gas in the gaseous NOₓ gas/steam mixture (15), thereby generating an aqueous diluted nitric acid mixture (17) and a gaseous NOₓ stream (22);
• a NOₓ gas compressor **(40)** for compressing the gaseous NOₓ stream **(22),** to provide in a compressed NOₓ gas stream **(24);**
• an absorption tower **(41)** downstream the NOₓ gas compressor **(40)** for absorbing the NOₓ gases from the compressed NOₓ gas stream **(24)** in water, to provide in a stream of raw nitric acid-containing residual NOₓ gas (27) and a tail gas (5) comprising NOₓ gases, comprising an absorption tower tail gas outlet **(6)** for evacuating the tail gas (5); and
• a tail gas expander **(7)** for expanding the tail gas **(5),** thereby generating an expanded tail gas **(64),** downstream of the absorption tower comprising a tail gas expander inlet (8) in fluid communication with the absorption tower tail gas outlet (6), and a tail gas expander outlet (9); **characterised in that**:
the system further comprises:
• means for splitting **(55)** the tail gas **(5)** into a tail gas stream **(5)** in fluid communication with the tail gas expander inlet **(8)** and a tail gas stream **(10)** having a pressure P1 in fluid communication with the compressed air stream (34); and
• means for adjusting the amount of tail gas (5) being splitted into the tail gas stream (5) in fluid communication with the tail gas expander inlet (8) and the tail gas stream (10) in fluid communication with the compressed air stream (34).

2. The system according to claim 1, further comprising a tail gas heater (43), having an inlet (46) in fluid communication with the absorption tail gas outlet (6) and an outlet (47) in fluid communication with the tail gas expander inlet (8), positioned upstream from the water cooler/condenser (38) for heating the tail gas (5) coming from the absorption tower (41) to a temperature ranging between 200 to 650 °C with the heat from the NOₓ gas/steam mixture **(15)** coming from the ammonia converter **(37),** and wherein means for splitting **(55)** the tail gas **(5)** is positioned upstream from the tail gas heater **(43)**.

3. The system according to any one of claims 1 to 2, further comprising a tail gas heater (43), having an inlet (46) in fluid communication with the absorption tail gas outlet (6) and an outlet (47) in fluid communication with the tail gas expander inlet (8), positioned upstream from the water cooler/condenser **(38)** for heating the tail gas **(5)** coming from the absorption tower **(41)** to a temperature ranging between 200 to 650 °C with the heat from the NOₓ gas/steam mixture **(15)** coming from the ammonia converter **(37),** and wherein means for splitting **(55)** the tail gas (5) is positioned downstream from the tail gas heater (43).

4. The system according to any one of claims 1 to 3, wherein the source of pressurised oxygen-rich gas **(50)** is supplied by a high pressure water electrolyser.

5. The system according to any one of claims 1 to 4, further comprising a source of oxygen-rich gas (54) having a pressure at least equal to atmospheric pressure, in fluid communication with the inlet (48) of the air compressor (36).

6. The system according to any one of claims 1 to 5, further comprising:
• an additional source of pressurised oxygen-rich gas (61) in fluid communication with an area downstream the NOₓ gas compressor (40) and upstream the absorption tower (41); or
• a gas ejector (**56**) having a first inlet (**57**) in fluid communication with the stream of tail gas (**10**) in fluid communication with the compressed air stream (**34**), a second inlet (**58**) in fluid communication with a source of air or an oxygen-rich gas at a pressure lower than P1, the gaseous NOₓ stream (**22**) or the expanded tail gas (**64**), and an outlet (**59**) in fluid communication with the compressed air stream (**34**); or
• an additional tail gas expander (**60**) in fluid communication with the stream of tail gas (**10**) in fluid communication with the compressed air stream (**34**).

7. The system according to claim 1 to 5, further comprising
• a high pressure bleacher (62) in fluid communication with the absorption tower (41) for removing NOx gases from the stream of raw nitric acid-containing residual NOₓ gas (27); and
• a high pressure water electrolyser (63) in fluid connection with the high pressure bleacher (62);
wherein the additional source of pressurised oxygen-rich-gas (61) is the electrolyser (62) and is in fluid communication with the high pressure bleacher (62) and, in turn, with the absorption tower (41) and an area downstream the NOx gas compressor (40) and upstream the absorption tower (41).

8. A method for producing nitric acid at reduced power consumption, comprising the steps of:
a) compressing air in an air compressor (36), thereby producing a compressed air stream (34);
b) mixing pressurised oxygen-rich gas (50) having a pressure higher than the pressure of the compressed air stream with the compressed air stream (34), thereby obtaining an oxygen-rich gas/compressed air stream mixture (53);
c) mixing the oxygen-rich gas/compressed air stream mixture(53) with an ammonia gas stream (32) in a mixing apparatus (35), thereby producing an ammonia/oxygen-enriched air mixture (14), such as to achieve an oxygen to ammonia molar ratio ranging from 1.3 to 9;
d) oxidising ammonia in the ammonia/oxygen-enriched air mixture (14) in an ammonia converter (37) at 800 to 950 °C, thereby producing a gaseous NOₓ gas/steam mixture (15), comprising water and nitric oxide;
e) converting the steam generated in the ammonia converter (37) or from the gaseous NOₓ gas/steam mixture (**15**) into power;
f) separating and condensing steam from NOₓ gas in the gaseous NOₓ gas/steam mixture (15), thereby generating an aqueous diluted nitric acid mixture (17) and a gaseous NOₓ stream (22), in a water cooler/condenser (38);
g) compressing the gaseous NOₓ stream (**22**), thereby producing a compressed NOₓ gas stream (**24**), in a NOₓ gas compressor (**40**);
h) absorbing the gaseous NOₓ stream (22) in an absorption tower (41), thereby producing a stream of raw nitric acid-containing residual NOₓ gas (**27**) and a tail gas (**5**) comprising NOₓ gases; and
i) expanding the tail gas (5) in a tail gas expander (7), thereby generating an expanded tail gas (64);
**characterised in that** the method further comprises the steps of:
j) mixing part of the tail gas (**5**) obtained from step h) at a pressure P1 with the compressed air stream (**34**), thereby generating a fluid communication between a stream of tail gas (10) and the compressed air stream (34);
k) measuring the temperature in the ammonia converter (37); and
I) adjusting the amount of the total gas volume mixed in step j) if the temperature measured in step k) is outside the range of 800-950 °C, such that the temperature in the ammonia converter is maintained in the range of 800 and 950 °C.

9. The method according to claim 8, further comprising the step of:
m) heating the tail gas (5) obtained in step h) to a temperature ranging from 200 to 650 °C in a tail gas heater (43) positioned upstream from the water cooler/condenser (38) with the heat from the NOₓ gas/steam mixture (15) coming from the ammonia converter (37).

10. The method according to claim 8, further comprising the step of:
m) heating the tail gas (5) obtained in step h) to a temperature ranging from 200 to 650 °C in a tail gas heater (43) positioned upstream from the water cooler/condenser (38) with the heat from the NOₓ gas/steam mixture (15) coming from the ammonia converter (37);
wherein, in step h), part of the tail gas (5) obtained in step h) or in step m) is pressurised.

11. The method according to any one of claims 8 to 10, further comprising the step of:
n) operating a high pressure water electrolyser in order to produce the oxygen gas (50) used in the mixing step i).

12. The method according to any one of claims 8 to 11, further comprising the step of:
o) sending an oxygen-rich gas having a pressure at least equal to atmospheric pressure (54) to the inlet (48) of the air compressor (36).

13. The method according to any one of claims 8 to 12, further comprising the steps of:
p) feeding an additional source of pressurised oxygen-rich gas (**61**) downstream the NOₓ gas compressor (**40**) and upstream the absorption tower (**41**); or
operating a gas ejector (56) having a first inlet (57), a second inlet (58) and an outlet (59), by flowing the stream of tail gas (10) in fluid communication with the compressed air stream (**34**) to the first inlet (**57**), flowing a source of air or oxygen-rich gas at a pressure lower than P1, the gaseous NOₓ stream (**22**) or the expanded tail gas (**64**) to the second inlet (**59**), and by ejecting the gas mixture at the outlet (**59**) to the compressed air stream (34); or
expanding the stream of tail gas (10) in fluid communication with the compressed air stream (34) in an additional tail gas expander (60).

14. The method according to claim 13, further comprising the steps of:
q) operating a high pressure bleacher (62) in fluid communication with the absorption tower (41), thereby removing NOx gases from the stream of raw nitric acid-containing residual NOₓ gas (27);
r) operating a high pressure water electrolyser (63), thereby producing the source of pressurised oxygen-rich-gas (61); and
s) supplying the source of pressurised oxygen-rich-gas (61) to the high pressure bleacher (62) and, in turn, to the absorption tower (41) and to an area downstream the NOx gas compressor (40) and upstream the absorption tower (41).

15. Use of the system according to any one of claims 1 to 7 for performing the method according to any one of claims 8 to 14.

16. A method for revamping a system for producing nitric acid, comprising:
• an air compressor (36) for compressing air, comprising an inlet (48) and an outlet (49), to provide in a compressed air stream (**34**);
• a source of pressurised oxygen-rich gas **(50)** having a pressure higher than the pressure of the compressed air stream (**34**), in fluid communication with the compressed air stream (34), to provide ing an oxygen-rich gas/compressed air stream mixture (53);
• a mixing apparatus (35) for mixing the oxygen-rich gas/compressed air stream mixture (53) with an ammonia gas stream (32), to provide in an ammonia/oxygen-enriched air mixture (14);an ammonia converter (37) for oxidising ammonia in the ammonia/oxygen-enriched air mixture **(14)**, to provide in a NOₓ gas/steam mixture (**15**), comprising water and nitric oxide; means for measuring the temperature in the ammonia converter (**37**);
• means for regulating the concentration of ammonia and of oxygen in the ammonia converter (**37**);
• a steam turbine (**51**) or an electric motor and means for converting steam into electricity, for converting steam into power, in fluid communication with the ammonia converter (37) or the NOₓ/gas steam mixture (15);
• a water cooler/condenser (**38**) for separating and condensing steam from NOₓ gas in the gaseous NOₓ gas/steam mixture (15), thereby generating an aqueous diluted nitric acid mixture (**17**) and a gaseous NOₓ stream (**22**);
• a NOₓ gas compressor (40), for compressing the gaseous NOₓ stream (22), to provide in a compressed NOₓ gas stream (24);
• an absorption tower (**41**) downstream the NOₓ gas compressor (**40**) for absorbing the NOₓ gases from the compressed NOₓ gas stream **(24)** in water, to provide in a stream of raw nitric acid-containing residual NOₓ gas (27) and a tail gas (5) comprising NOₓ gases, comprising an absorption tower tail gas outlet (6) for evacuating the tail gas (5); and
a tail gas expander (7) for expanding the tail gas, thereby generating an expanded tail (64) downstream of the absorption tower comprising a tail gas expander inlet (8) in fluid communication with the absorption tower tail gas outlet (6), and a tail gas expander outlet (9); into a system according to claims 1 to 6, comprising the steps of:
• introducing means for splitting (**55**) the tail gas (**5**) into a tail gas stream (5) in fluid communication with the tail gas expander inlet (8) and a tail gas stream (10) in fluid communication with the compressed air stream (34); and
• introducing means for adjusting the amount of tail gas (5) being splitted into the tail gas stream (5) in fluid communication with the tail gas expander inlet (8) and the tail gas stream (10) in fluid communication with the compressed air stream (34).
